**Europäisches Patentamt**

(19) **European Patent Office**

**Office européen des brevets**

(11) Publication number : **0 427 310 B1**

## EUROPEAN PATENT SPECIFICATION

(45) Date of publication of patent specification :
09.06.93 Bulletin 93/23

(51) Int. Cl.⁵ : **A23C 19/05, A23C 9/137**

(21) Application number : **90202761.4**

(22) Date of filing : **17.10.90**

(54) **Dairy products.**

(30) Priority : **07.11.89 GB 8925098**

(43) Date of publication of application :
**15.05.91 Bulletin 91/20**

(45) Publication of the grant of the patent :
**09.06.93 Bulletin 93/23**

(84) Designated Contracting States :
**AT BE CH DE DK ES FR GB GR IT LI NL SE**

(56) References cited :
EP-A- 0 388 572
EP-A- 0 403 696
DE-C- 876 187
US-A- 3 969 534
FOOD SCIENCE & TECHNOLOGY ABSTRACT,
no. 75-11-P2582 (75060692); & CS-A-151 976 (B.
HYLMAR et al.)
LEBENSMITTELTECHNIK, vol. 19, no. 11, 1987,
pages 642-643; L. VOGT: "Entwicklung und
Anwendung eines Fettersatzstoffes"
FOOD SCIENCE & TECHNOLOGY AB-
STRACTS, no. 69-08-P0717 (69031232); M.
SCHULZE: "Basic and applied research in the
manufacture of long-life cultured dairy pro-
ducts", & MILCH WISSENSCHAFT, vol. 24, no.
1, p. 28-34(2), 88-97, 1969

(73) Proprietor : **UNILEVER N.V.**
**Weena 455**
**NL-3013 AL Rotterdam (NL)**
(84) **BE CH DE DK ES FR GR IT LI NL SE AT**
Proprietor : **UNILEVER PLC**
**Unilever House Blackfriars P.O. Box 68**
**London EC4P 4BQ (GB)**
(84) **GB**

(72) Inventor : **Visser, Johannes, Unilever Res.**
**Lab.**
**Olivier van Noortlaan 120**
**Vlaardingen (NL)**
Inventor : **Torenvliet, Lim, Unilever Res. Lab.**
**Olivier van Noortlaan 120**
**Vlaardingen (NL)**
Inventor : **Kloosterman, Johannes, Unilever**
**Res. Lab.**
**Olivier van Noortlaan 120**
**Vlaardingen (NL)**

(74) Representative : **Hartong, Richard Leroy et al**
**Unilever N.V. Patent Division P.O. Box 137**
**NL-3130 AC Vlaardingen (NL)**

## Description

This invention relates to low-fat dairy products and to the preparation of improved low-fat dairy products.

In the prevailing appeal among consumers of a healthy diet, particular attention is drawn to reducing the daily intake of animal fat, not only to reduce the calorific content of the diet, but also the content of saturated fatty acids and cholesterol. To this end, the high fat content in traditional food products has been reduced in recent years, while attempting to retain the mouth response characteristic of full fat products. When the amount of fat in cheese is reduced, the textural properties of a hard or semi-hard cheese, in particular in the case of Gouda cheese, are changed. Such a reduction makes the cheese firm, increasing the rubbery texture of the cheese which ultimately can be almost inedible owing to its extreme toughness.

On the other hand, reducing fat in yoghurt, soft or fresh cheese results in a loss of creaminess and an enhanced dryness in the mouth is perceived. Here, too, the product may be almost inedible.

A solution to this problem has now been found in a process to prepare low-fat dairy products in which, in a particular step of the process, part of the fat is replaced by hydrated starch or pregelatinized starch particles having a particle size of 4.0-20.0 μm. These particles induce a mouthfeel similar to that of the fat in cheese-like products.

The present invention therefore provides a process for the preparation of improved low-fat dairy products, preferably cheese, by aggregation of casein in milk, in which at least part of the milk fat normally present in the milk is replaced by other ingredients, which process is characterized by the fact that at least part of the milk fat is replaced by an amount of hydrated starch or pregelatinized starch particles having a particle size of 4.0-20.0 μm before aggregation of the casein by rennet is carried out.

The starch or pregelatinized starch particles can be added to skimmed or partly skimmed milk before or after pasteurization thereof.

The invention also provides an improved low-fat cheese which contains an amount of hydrated starch or pregelatinized starch particles having a particle size of more than 4.0-20.0 μm.

A prerequisite of the particles that can be used is that the particles retain their solid properties during the process.

Particle sizes substantially above 20 μm are not satisfactory in terms of mouth response to the product.

In WO 89/12403 (published on 28th December 1989) the use of hydrated carbohydrate particles having a mean particle size of 0.1-4.0 μm with less than 2% of the total number of particles exceeding 5 μm in diameter in food products is described. The food products include cheeses, cream cheese and yoghurt. However, the addition of the carbohydrate particles in a particular step of the process is not mentioned.

Preferably, low-fat cheeses are prepared in accordance with the invention with a fat on dry matter content of less than 40% by regulating the fat content of the skimmed milk and by varying the amount of added hydrated starch particles. In this way, either hard, semi-hard, processed, fresh or soft cheeses or yoghurt can be prepared.

Preferably, the amount of particles added to the cheese milk is from 1 to 5 wt.% based on the fat content of the milk.

## EXAMPLE I

Cheese milk was prepared by mixing sufficient skim milk with full fat milk to a fat level of 1.5 wt.%, to which a pregelatinized starch (= Remyrice AP, average particle size 6.0 μm) was added at a ratio of 1 part to 30 parts of the milk composition. The milk mixture so obtained was pasteurized in a conventional manner by passage through a heat exchanger for 35 seconds at 72°C.

Gouda cheese was prepared in a traditional manner from the resulting reduced fat milk composition by adding starter culture and rennet at 31°C. The resulting curd had the same structure as the equivalent full fat cheese and subsequent cutting, wheying off and washing procedures were unchanged. The cheese was pressed before brining and coated as usual before storage for 10 weeks in a cheese ripening room.

Cheese taste and texture of the ripened product were evaluated by a panel on a 5 point scale in comparison with full fat Gouda cheese and with a product made in a comparative test, in which the above example was repeated without adding whey protein.

The results of the comparison appear on the accompanying Table.

EP 0 427 310 B1

TABLE

Low-fat cheese - overall panel scores on a 5 point scale
(5 as maximum). Influence of Remyrice particles.

| Sample | 48+* | A* | B |
|---|---|---|---|
| consistency: overall | 4.6 | 1.7 | 3.0 |
| flavour: overall quality | 5.0 | 1.8 | 2.0 |
| overall intensity | 4.6 | 2.0 | 2.7 |

48+*    = commercial full fat Gouda cheese)  * comparative
A*      = without starch particles          )   examples
B       = with Remyrice particles

The fat content on dry matter of the samples A and B was 20%.
The results must be interpreted in such a way that the figure that is closest to the figure for sample 48+ is the best.

**Claims**

1.  Process for the preparation of improved low-fat dairy products by aggregation of casein in milk, in which at least part of the milk fat normally present in the milk is replaced by other ingredients, characterized by the fact that at least part of the milk fat is replaced by an amount of hydrated starch or pregelatinized starch particles having a particle size of 4.0-20.0 μm before the aggregation of the casein is carried out.

2.  Process according to Claim 1, wherein the fat content of the skimmed milk and the amount of added hydrated starch or pregelatinized starch particles are such that the low-fat dairy product has a fat on dry matter content of less than 40%.

3.  Process according to Claims 1 to 2, wherein yoghurt or hard, semi-hard, processed, fresh or soft cheeses are prepared.

4.  Low-fat cheese, which contains an amount of hydrated starch or pregelatinized starch particles having a particle size of more than 4.0-20.0 μm.

**Patentansprüche**

1.  Verfahren zur Herstellung verbesserter Molkereiprodukte geringen Fettgehalts durch Gerinnung von Casein in Milch, bei dem mindestens ein Teil des nonmalerweise in der Milch vorliegenden Milchfettes durch andere Bestandteile ersetzt wird, dadurch gekennzeichnet, daß mindestens ein Teil des Milchfettes durch eine Menge Teilchen von hydratisierter Stärke oder vorgelatinierter Stärke einer Teilchengröße von 4,0 bis 20,0 μm ersetzt wird, bevor die Gerinnung des Caseins bewirkt wird.

2.  Verfahren nach Anspruch 1, worin der Fettgehalt der entrahmten Milch und die Menge der zugefügten Teilchen von hydratisierter Stärke oder vorgelatinierter Stärke so bemessen sind, daß das Molkereiprodukt geringen Fettgehalts weniger als 40 % Fett, bezogen auf Trockensubstanz, enthält.

3.  Verfahren nach Anspruch 1 bis 2, worin Yoghurt oder harter, halbharter, bearbeiteter, frischer oder weicher

3

Käse hergestellt wird.

4. Magerkäse, der eine Menge Teilchen von hydratisierter Stärke oder vorgelatinierter Stärke einer Teilchengröße von mehr als 4,0 bis 20,0 μm enthält.

## Revendications

1. Procédé de préparation de produits laitiers à faible teneur en matière grasse améliorés obtenus par agrégation de la caséine du lait, dans lequel au moins une partie de la matière grasse du lait normalement présente dans le lait est remplacée par d'autres ingrédients, caractérisé par le fait qu'au moins une partie de la matière grasse du lait est remplacée par une quantité d'amidon hydraté ou de particules d'amidon pré-gélifiées ayant une taille de particules de 4,0 - 20,0 micromètres avant que ne soit effectuée l'agrégation de la caséine.

2. Le procédé selon la Revendication 1, dans lequel la teneur en matière grasse du lait écrémé et la quantité d'amidon hydraté ou de particules d'amidon pré-gélifiées ajoutée est telle que le produit laitier à faible teneur en matière grasse a une teneur en matière grasse inférieure à 40% par rapport à la teneur en matière sèche.

3. Le procédé selon l'une des Revendications 1 à 2, dans lequel on prépare du yaourt ou des fromages à pâte dure, demi-dure, fondus, frais ou à pâte molle.

4. Un fromage à faible teneur en matière grasse, contenant une quantité d'amidon hydraté ou de particules d'amidon pré-gélifiées ayant une taille de particules supérieure à 4,0 - 20,0 micromètres.